# EUROPEAN PATENT APPLICATION

(11) **EP 4 485 243 A1**
(43) Date of publication of application: **01.01.2025**
(21) Application number: 23315263.6
(22) Date of filing: 29.06.2023
(51) Int. Cl.: G06F 21/55, G06F 21/74, G06F 21/75, H04L 9/00

(54) **ELECTRONIC SYSTEM COMPRISING AT LEAST ONE INTEGRATED SENSOR FOR MONITORING SIDE CHANNEL EMISSIONS OF A SECURE PROCESSOR**

(71) Applicant: THALES DIS FRANCE SAS, 92190 Meudon (FR)
(72) Inventor: Teglia, Yannick, 13720 BELCODENE (FR); Loubet Moundi, Philippe, 13600 LA CIOTAT (FR); Gravellier, Joseph, 12100 MILLAU (FR)
(74) Representative: Bricks, Amélie

(57) **Abstract**

The present invention relates to an electronic system (1) comprising a secure processor (102) and an integrated sensor (101) configured for monitoring side channel emissions of said secure processor, wherein:
- the integrated sensor is electrically disconnected from the secure processor,
- said secure processor is configured for performing a processing operation generating a specific side channel emission called trigger side channel emission,
- said integrated sensor is configured such that monitoring said trigger side channel emission causes the integrated sensor to switch to an operation mode depending on said trigger side channel emission.

## Description

### FIELD OF THE INVENTION

The present invention relates to the field of chip protection against side attacks, and more particularly to a processing device, and a corresponding method, comprising sensors monitoring its side channel emissions while preventing any use of such sensors by an attacker.

### BACKGROUND OF THE INVENTION

Sensitive information, such as secret keys to be used in cryptographic algorithms are usually protected in order to prevent an access to it by an attacker, even when the attacker has full control of the device performing sensitive operations accessing such sensitive information. Nevertheless, algorithms performing these sensitive operations are subject to side-channel attacks (SCA), based on an analysis of traces from the device when performing the operation, such as power consumption or electromagnetic emissions. As an example, SCA may be used to retrieve at least of a part of a secret or private key when used in a cryptographic operation, for example as exponent of a modular exponentiation, or as a scalar used in the frame of an Elliptic curve cryptography (ECC) protocol, such as ECDSA.

In order to protect a processor performing sensitive operations against side channel analysis, it may be useful to analyze the side channel emissions of such a processor when it performs sensitive operations, in order to reduce or jam such emissions by improving the processor design or by embedding countermeasures against SCA.

Nevertheless, analyzing side channel emissions from outside a processor usually requires a sophisticated test-bed, which makes it both cumbersome and costly, and prevents large-scale analysis on multiple processors in parallel.

In order to make easier side channel analysis, side channel emission sensors may be integrated in the processor or in its vicinity, in a SoC for example. Such a solution makes it much easier to collect side channel traces during operation of the processor. Nevertheless, a drawback of such a solution is that such integrated sensors remain in place after the product comprising the processor has been released. In addition, modern processors use integrated power and temperature sensors for various reasons such as efficiency, security and reliability control. As a result, an attacker may use these sensors for performing his own side channel attack on the processor: Software-based Hardware Attacks (SbHWA) is a recent class of such side-channel attack that doesn't require any hardware as it uses sensors directly integrated in processors in order to eavesdrop the activity of victim applications. Such an attack does not require any laboratory equipment. Therefore, it makes remote hardware attacks possible. These attacks have been successfully conducted on various platforms such as SoC or FPGAs and demonstrate that it is possible to eavesdrop the power activity of an application using integrated sensor. [Joseph Gravellier, Jean-Max Dutertre, Yannick Teglia, and Philippe Loubet Moundi. 2021. SideLine: How Delay-Lines (May) Leak Secrets from Your SoC. In Constructive Side-Channel Analysis and Secure Design: 12th International Workshop, COSADE 2021, Lugano, Switzerland, October 25-27, 2021, Proceedings. Springer-Verlag, Berlin, Heidelberg, 3-30. https://doi.org/10.1007/978-3-030-89915-8 1]. Such attacks can be particularly useful for side channel attacks requiring a lot of data, such as Deep Learning based side channel attacks. Indeed, they may run in background for months or years without the victim application detecting that it's being spied on.

In addition, such integrated sensors are usually electrically connected to the processor in order to enable the processor to control their operation. It adds a physical connection to the processor, which increases the attack surface of the processor and may be leveraged by an attacker to bypass protections embedded in the processor.

Therefore, there is a need of a solution enabling to run side channel emission sensors in an electronic device for testing purposes, while preventing any further use of such sensors by an attacker for performing a side channel attack.

### SUMMARY OF THE INVENTION

For this purpose and according to a first aspect, this invention therefore relates to an electronic system comprising a secure processor and an integrated sensor configured for monitoring side channel emissions of said secure processor, wherein:
- the integrated sensor is electrically disconnected from the secure processor,
- said secure processor is configured for performing a processing operation generating a specific side channel emission called trigger side channel emission,
- said integrated sensor is configured such that monitoring said trigger side channel emission causes the integrated sensor to switch to an operation mode depending on said trigger side channel emission.

Such an electronic system enables to make side channel analysis of the secure processor available while prevent both any direct attack of the secure processor from the integrated sensor and any side channel attack against the secure processor based on data provided by the integrated sensors.

The electronic system according to the first aspect may comprise an untrusted processor and the integrated sensor may be configured for being protected against manipulations from the untrusted processor.

It enables to prevent an attacker from using the untrusted processor for changing the operation mode of an integrated sensor in order to perform a side channel attacks using its output.

Causing the integrated sensor to switch to an operation mode depending on said trigger side channel emission may comprise enabling the integrated sensor, disabling the integrated sensor or changing the sensitivity of the integrated sensor.

It enables to deactivate a sensor when needed and to reactivate it later on, or to adapt its sensitivity to the degree of confidentiality of the data handled by the secure processor.

The integrated sensor may be connected to the untrusted processor in such a way as to allow data to be pushed only from said integrated sensor to said untrusted processor.

It prevents any command from being injected to the sensor from the untrusted processor.

According to an embodiment, the electronic system according to the first aspect may comprise further a register for storing output values of the integrated sensor accessible by said untrusted processor, and the integrated sensor may be configured for monitoring voltage fluctuations of the secure processor and for programming a voltage output value in said register.

According to a second aspect, this invention relates to a method for secure operation of an integrated sensor of an electronic system, configured for monitoring side channel emissions of a secure processor of said electronic system and electrically disconnected from the secure processor comprising:
- performing, by said secure processor, a first processing operation generating first side channel emissions,
- monitoring, by said integrated sensor, said first side channel emissions,
- performing, by said secure processor, a second processing operation generating a trigger side channel emission,
- monitoring, by said integrated sensor, said trigger side channel emission and switching to an operation mode depending on said monitored trigger side channel emission.

According to a third aspect, this invention relates to a method for secure operation of a plurality of integrated sensor of an electronic system, each configured for monitoring side channel emissions of a secure processor of said electronic system and electrically disconnected from the secure processor, comprising:
- performing, by said secure processor, a first processing operation generating first side channel emissions,
- monitoring, by each integrated sensor, said first side channel emissions,
- performing, by said secure processor, a second processing operation generating a trigger side channel emission,
- monitoring, by each integrated sensor, said trigger side channel emissions and switching to an operation mode depending on said trigger side channel emission.

According to a fourth aspect, this invention also relates to a computer program product directly loadable into the memory of at least one computer, comprising software code instructions for performing the steps of the methods according to the second and the third aspect when said product is run on the computer.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic system according to an embodiment of the present invention;
- Figure 2 is a schematic illustration of a method for secure operation of an integrated sensor according to an embodiment of the present invention;
- Figure 3 is a schematic illustration of an electronic system comprising a plurality of integrated sensors according to an embodiment of the present invention.

### DETAILED DESCRIPTION OF EMBODIMENTS OF THE INVENTION

According to a first aspect, the invention relates to an electronic system comprising a secure processor performing sensitive operations and which is therefore to be protected against side channel attacks.

Such an electronic system 1 may for example be a smartcard. Alternatively, it may be a System-on-Chip (SoC) comprising an integrated secure element, a secure enclave or an Hardware Security Module (HSM), such as SoCs used in smartphones or cars.

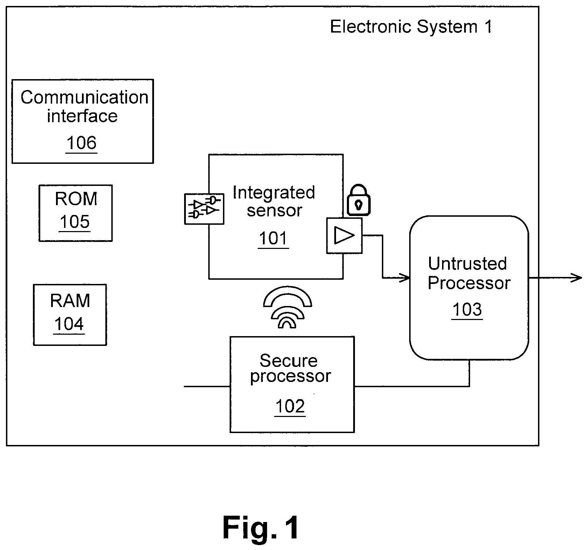

As described on **Figure** 1, such an electronic system 1 includes an integrated sensor 101 configured for monitoring side channel emissions of the secure processor 102 of the electronic system. Such an integrated sensor may for example be a voltage or current sensor monitoring the power consumption of the secure processor, or an electromagnetic sensor monitoring magnetic field variations resulting from operation of the secure processor, or a temperature sensor, or a circuit such as a Delay Line (DL), Delay Locked Loop (DLL) or Phase Locked Loop (PLL) which are all sensible to operations performed by the secure processor.

The electronic system 1 may further comprise an untrusted processor 103 which may be used to perform non-sensitive computations. This untrusted processor may be connected to the integrated sensor 101 in order to collect measurement outputs from it and to analyze it. When the electronic system is a SoC, such as a smartphone processor, the untrusted processor may be the main, unsecure, CPU of the chip, and the secure processor may be the integrated secure element iSE included in the chip.

The electronic system 1 may further comprise a random access memory (RAM) 104, a read-only memory (ROM) 105 and a communication interface 106. Such a communication interface may be used to connect the electronic system to various forms of wireless networks, e.g., wide-area networks, WiFi networks, or mobile telephony networks, or to wired networks such as Ethernet networks.

The integrated sensor 101 enables to collect side channel emissions of the secure processor in a test phase, when the electronic system is being tested for example by its manufacturer, by a client or a certification authority. In such a test phase, it can be used for characterizing the resistance of the secure processor against side-channel attacks and for testing protections against such attacks already implemented in the electronic system.

In order to prevent an attacker from using it for attacking the secure processor while the electronic system is being used on the field, a first idea according to the invention is to keep it electrically disconnected from the secure processor. Using such an architecture, there is no wired connection between the secure processor and the integrated sensor, and no input interface at the secure processor from the integrated sensor, therefore preventing any injection of a malicious payload from the integrated sensor into the secure processor.

Nevertheless, even without any wired connection between the secure processor and the integrated sensor, the integrated sensor may be used by an attacker for easily performing side channel attacks against the secure processor. In order to prevent it, a second idea according to the invention is to enable the secure processor to send commands to the integrated sensor that will change its mode of operation, for example for disabling it. As discussed above, there is no direct wired connection between the secure processor and the integrated sensor in the architecture according to the invention. Therefore, a last main idea of the invention is to have such commands passed to the integrated sensor across a covert channel, hidden in the side channel emissions measured by the integrated sensor.

In order to achieve such a transmission of commands from the secure processor to the integrated sensor, the secure processor is configured for performing a processing operation generating a specific side channel emission called in the rest of the description "trigger side channel emission" and the integrated sensor is configured such that monitoring this trigger side channel emission causes the integrated sensor to switch to an operation mode depending on the trigger side channel emission.

As an example, using such trigger side channel emissions, the integrated sensor may be disabled, or its sensitivity may be modified. When the integrated sensor was already disabled, such a trigger side channel emission may be used to enable it again. In order to enable switching the integrated sensor to multiple different operation modes, the secure processor may be configured for generating several different trigger side channel emissions, each corresponding to a switch to a different operation mode when monitored and processed by the integrated sensor.

When the electronic system comprises an untrusted processor connected to the integrated sensor, the integrated sensor may be configured for being protected against manipulations from the untrusted processor, in order to prevent an attacker from sending from the untrusted processor to the integrated sensor commands changing its operation mode. Otherwise, an attacker may use such commands for re-enabling a disabled integrated sensor, and use it for a side channel attack. As an example of implementation, the integrated sensor may be connected to the untrusted processor in such a way as to allow data to be pushed only from the integrated sensor to the untrusted processor, preventing any data transmission in the other direction.

In an exemplary embodiment, the integrated sensor is configured for monitoring voltage fluctuations of the secure processor. The electronic system may comprise a register for storing output values of the integrated sensor and the integrated sensor may be configured for, after measuring a voltage of the secure processor, programming a voltage output value in the register. The untrusted processor may have read-only access rights on this register in order to get access to the outputs of the integrated sensor.

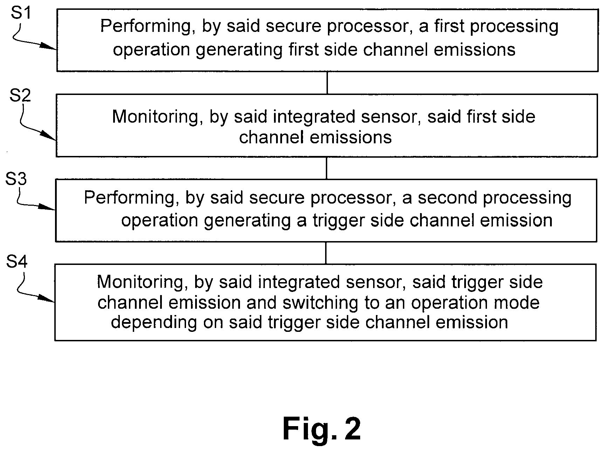

The next paragraphs will describe in more details the steps of a method for secure operation of an integrated sensor according to a second aspect of the invention, as depicted in **Figure 2****.**

In a first step S1, the secure processor performs a first processing operation generating first side channel emissions.

In a second step S2, the integrated sensor monitors these first side channel emissions. This step is performed in parallel to the first step.

These two first steps may be performed continuously until the secure processor decides to change the operation mode of the integrated sensor.

Then, in a third step S3, the secure processor performs a second processing operation generating a trigger side channel emission designed to act as a code instructing the integrated sensor to change its operation mode.

In a fourth step S4, the integrated sensor monitors the trigger side channel emission and switches to an operation mode depending on the monitored trigger side channel emission.

As an example, the two first steps may be performed during a test phase and the third and fourth steps may be performed when the electronic system is handed over to a client, before it is used on the field, in order to switch the integrated sensor to an operation mode corresponding to a deactivation of the integrated sensor.

Alternatively, the two first steps may be performed during normal operation of the electronic system, in the field, when the electronic system is deemed to be in a safe environment, when no attack are detected, or when the operations performed by the electronic system do not handle sensitive data. The third and fourth steps may then be performed when suspicious activity which could be the signature of an attack is detected or just before sensitive operations are performed.

As another example, the two first steps may be performed at a manufacturer for testing. Then, the third and fourth steps may be performed just before passing the device to a third party in order to lower the sensitivity of the integrated sensor, for example for protecting the secrecy of the device architecture from being discovered through SCA. The sensitivity of the sensor may be set back to its original value when maintenance of the device is performed.

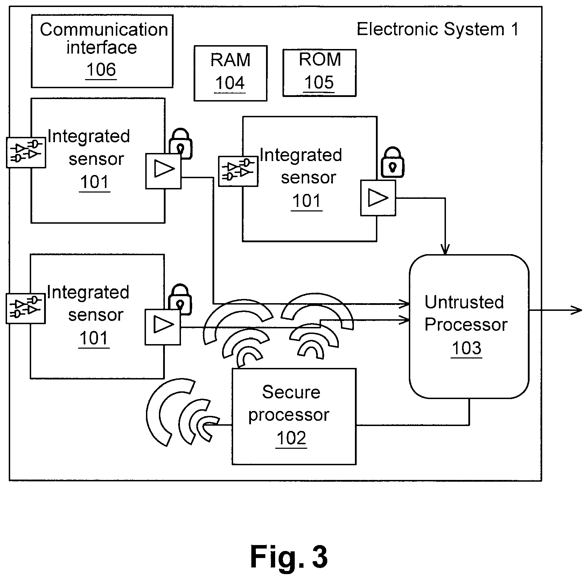

In an embodiment illustrated on **Figure 3****,** the electronic system may comprise not only one but a plurality of integrated sensors for managing the accuracy of the side-channel analysis of the electronic system during the testing phase, for example for performing Deep Learning base side channel analysis. Using a plurality of integrated sensors also allows to activate some and deactivate the others, therefore allowing SCA of only some parts of the device.

In such an embodiment, at the second step S2, each integrated sensor monitors the first side channel emissions emitted by the secure processor at the first step.

At the third step S3, the trigger side channel emission generated by the secure processor may act as a code instructing one or more of the integrated sensors to change their operation mode.

At the fourth step S4, each integrated sensor monitors the trigger side channel emission and the integrated sensors recognizing the trigger side channel emission as a command for operation mode switching switches to an operation mode depending on the monitored trigger side channel emission. In an embodiment, the emission of the trigger side channel emission by the secure processor makes several integrated sensors, possibly all the integrated sensors of the electronic system, switch to the same operation mode. Alternatively, each integrated sensor may be responsive to trigger side channel emissions different than the ones to which the other integrated sensors are responsive.

According to a second aspect, this invention also relates to a computer program product directly loadable into the memory of at least one computer, comprising software code instructions for performing the steps of the methods described here above when said product is run on the computer.

Consequently, such method, electronic system and computer program product enable to design an electronic system comprising integrated side-channel sensors monitoring a secure processor without making such integrated sensors a security weakness for the secure processor. An attacker is prevented from using it to attack the secure processor, either directly or by a side-channel attack, by making the secure processor, and only it, able to change the operation mode of the integrated sensors without any direct electrical wired connection between the secure processor and the integrated sensors.

Since no test bed is required anymore for analyzing the side channel emissions of such an electronic system with embedded sensors, it becomes possible to perform side-channel testing of multiple electronic systems according to the invention in parallel, for a limited cost. Such a feature may be used for further improving side-channel analysis, for example using Deep Learning based side-channel analysis.

## Claims

1. An electronic system (1) comprising a secure processor (102) and an integrated sensor (101) configured for monitoring side channel emissions of said secure processor, wherein:
- the integrated sensor is electrically disconnected from the secure processor,
- said secure processor is configured for performing a processing operation generating a specific side channel emission called trigger side channel emission,
- said integrated sensor is configured such that monitoring said trigger side channel emission causes the integrated sensor to switch to an operation mode depending on said trigger side channel emission.

2. The electronic system of claim 1, comprising an untrusted processor (103), wherein the integrated sensor is configured for being protected against manipulations from the untrusted processor.

3. The electronic system of claim 1 or 2, wherein causing the integrated sensor to switch to an operation mode depending on said trigger side channel emission comprises enabling the integrated sensor, disabling the integrated sensor or changing the sensitivity of the integrated sensor.

4. The electronic system of claim 2 or 3, wherein the integrated sensor is connected to the untrusted processor in such a way as to allow data to be pushed only from said integrated sensor to said untrusted processor.

5. The electronic system of claim 4, comprising further a register for storing output values of the integrated sensor accessible by said untrusted processor, and wherein the integrated sensor is configured for monitoring voltage fluctuations of the secure processor and for programming a voltage output value in said register.

6. A method for secure operation of an integrated sensor (101) of an electronic system (1), configured for monitoring side channel emissions of a secure processor (102) of said electronic system and electrically disconnected from the secure processor comprising:
- performing (S1), by said secure processor, a first processing operation generating first side channel emissions,
- monitoring (S2), by said integrated sensor, said first side channel emissions,
- performing (S3), by said secure processor, a second processing operation generating a trigger side channel emission,
- monitoring (S4), by said integrated sensor, said trigger side channel emission and switching to an operation mode depending on said monitored trigger side channel emission.

7. A method for secure operation of a plurality of integrated sensor (101) of an electronic system (1), each configured for monitoring side channel emissions of a secure processor (102) of said electronic system and electrically disconnected from the secure processor, comprising:
- performing (S1), by said secure processor, a first processing operation generating first side channel emissions,
- monitoring (S2), by each integrated sensor, said first side channel emissions,
- performing (S3), by said secure processor, a second processing operation generating a trigger side channel emission,
- monitoring (S4), by each integrated sensor, said trigger side channel emissions and switching to an operation mode depending on said trigger side channel emission.

8. A computer program product directly loadable into the memory of at least one computer, comprising software code instructions for performing the steps of claim 6 or 7 when said product is run on the computer.
